# EUROPEAN PATENT SPECIFICATION

(11) **EP 4 209 300 B1**
(45) Date of publication and mention of the grant of the patent: **28.10.2026**
(21) Application number: 23150790.6
(22) Date of filing: 09.01.2023
(51) Int. Cl.: B23K 26/03, B23K 26/064, B23K 26/06, B23K 26/146, B23K 26/38, B23K 26/382

(54) **WATERJET-GUIDED LASER MACHINE WITH INLINE OPTICAL FEEDBACK CONTROL**
WASSERSTRAHLGEFÜHRTE LASERMASCHINE MIT OPTISCHER INLINE-RÜCKKOPPLUNGSREGELUNG
MACHINE LASER GUIDÉE PAR JET D'EAU AVEC COMMANDE OPTIQUE EN LIGNE DE RÉTROACTION

(30) Priority: 07.01.2022 US 202217570484
(43) Date of publication of application: 12.07.2023
(73) Proprietor: RTX Corporation, Farmington, CT 06032 (US)
(72) Inventor: WANG, Zhigang, South Windsor 06074 (US); MENDOZA, Jeffrey Michael, Manchester 06040 (US); SRINIVASAN, Gajawalli V., South Windsor 06074 (US); RIEHL, John D., Hebron 06248 (US); FERNANDEZ, Robin H., East Haddam 06423 (US)
(74) Representative: Dehns

(56) References cited:
- EP-A1- 0 129 603
- EP-A1- 2 208 568
- JP-B2- 5 711 899
- US-A1- 2009 084 765
- US-A1- 2012 074 105
- US-A1- 2016 039 045

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature exhaust gas flow. The high-pressure and temperature exhaust gas flow expands through the turbine section to drive the compressor and the fan section. The compressor section may include low and high pressure compressors, and the turbine section may also include low and high pressure turbines.

Airfoils in the turbine section and components in other hot sections of the engine are typically formed of a superalloy and may include thermal barrier coatings to extend temperature capability and lifetime. Ceramic materials (e.g., monolithic and ceramic matrix composites) are also being considered for these components. Among other attractive properties, ceramics have high temperature resistance. It has been a challenge, however, to develop efficient processes to machine features, such as cooling holes and slots, into ceramic components.

US 2009/084765 A1 discloses a prior art laser machining apparatus using a laser beam introduced into a jet liquid column.

JP 5 711 899 B2 discloses a prior art laser beam machining device equipped with an alignment regulation device.

EP 2 208 568 A1 discloses a prior art apparatus and method for processing material by means of a laser.

EP 0 129 603 A1 discloses a prior art laser machining apparatus.

US 2012/074105 A1 discloses a prior art laser machining method and apparatus.

US 2016/039045 A1 discloses prior art methods and systems for characterizing laser machining properties by measuring keyhole dynamics using interferometry.

### SUMMARY

According to an aspect of the present invention, there is provided a waterjet-guided laser machine as set forth in claim 1.

In a further embodiment of any of the foregoing embodiments, the laser optical path contains, in order from the laser source to the waterjet head, a first lens, a first mirror, a second mirror, and a second lens.

In a further embodiment of any of the foregoing embodiments, the light beam optical delivery path is coincident with the with the laser optical path from the second mirror to the second lens and from the second lens to the waterjet head, and the laser optical path is non-coincident with the with the light beam optical delivery path from the laser source to the first lens, from the first lens to the first mirror, and from the first mirror to the second mirror.

In a further embodiment of any of the foregoing embodiments, the light beam optical return path is coincident with the with the laser optical path from the waterjet head to the second lens, from the second lens to the second mirror, and from the second mirror to the first mirror.

In a further embodiment of any of the foregoing embodiments, the light beam optical return path includes a third mirror, and the light beam optical return path is non-coincident with the laser optical path from the first mirror to the third mirror and from the third mirror to the light sensor.

In a further embodiment of any of the foregoing embodiments, the LED is operable to emit the light beam having a wavelength of 495-570 nanometers.

In a further embodiment of any of the foregoing embodiments, the electronic controller is configured to identify a fault condition if the depth-of-cut is below a threshold over a preset duration.

In a further embodiment of any of the foregoing embodiments, the electronic controller is configured to pulse the light beam in coordination with the pulsed laser beam such that during an OFF period of the pulsed laser beam the light beam is ON and during an ON period of the pulsed laser beam the light beam if OFF.

A further embodiment of any of the foregoing embodiments includes an acoustic sensor operable to emit acoustic sensor signals responsive to receiving sound emitted from the workpiece, and the electronic controller is configured to determine an initiation of cutting of the workpiece by the laser based on the acoustic sensor signals.

In a further embodiment of any of the foregoing embodiments, the electronic controller is configured to determine the initiation of the cutting of the workpiece by the laser based on the frequency of the acoustic sensor signals.

According to a further aspect of the present invention, there is provided a method of machining a workpiece in a waterjet-guided laser machine as set forth in claim 11.

In a further embodiment of any of the foregoing embodiments, the electronic controller identifies a fault condition if the depth-of-cut is below a threshold over a preset duration.

In a further embodiment of any of the foregoing embodiments, the electronic controller pulses the light beam in coordination with the pulsed laser beam such that during an OFF period of the pulsed laser beam the light beam is ON and during an ON period of the pulsed laser beam the light beam if OFF.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a waterjet-guided laser machine.
Figure 2 illustrates an example of such control logic strategy.
Figure 3 illustrates light reflection off of a workpiece for feedback and process control.
Figure 4 illustrates a method for machining a workpiece using a waterjet-guided laser machine.
Figure 5 illustrates a further example of a waterjet-guided laser machine and method.

### DETAILED DESCRIPTION

Components in gas turbine engines, such as but not limited to, turbine blades, turbine vanes, blade outer air seals, and combustor panels, include cooling holes, slots, and other relatively small-scale features. Such features may be formed in a machining operation after manufacture of the base component. However, when the component is made of ceramic material, such as monolithic ceramic or ceramic matrix composite (CMC), efficient machining is a challenge because ceramics are extremely hard and brittle.

Waterjet-guided laser machining (WJGM) is one process that is under consideration for producing such features. In general, WJGM involves a laser beam that is guided by internal reflection in a narrow jet of water to impinge upon a workpiece. The laser beam ablates the surface of the workpiece, thereby removing material. The waterjet may be scanned across the surface of the workpiece in multiple passes to remove material layer-by-layer and thereby form a hole, slot, or other feature. In comparison to other machining processes, WJGM generally has high accuracy, long working distance, and low thermal load on the workpiece. Deviations in process parameters can sometimes result in features that exceed desired tolerances, especially for the manufacturing of precision components. As a consequence, the process window, i.e., the range of permissible parameter deviations, is often narrow. To a limited extent, acoustic emission, laser triangulation, and capacitive sensors may be used to monitor the process. However, further improvements in process monitoring and process control are desired for higher precision, rapid cycle times, and higher efficiency, particularly for the machining of ceramic materials.

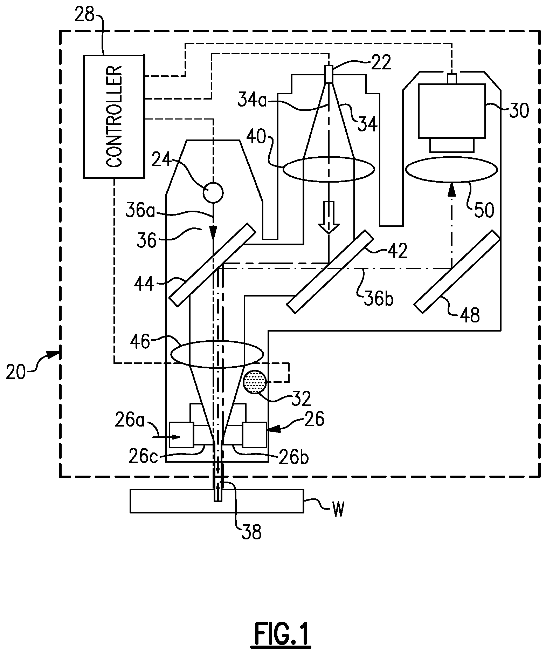

In these regards, Figure 1 illustrates an example waterjet-guided laser machine 20 ("machine 20") for precision machining. The examples herein may describe the machine 20 and related machining process based on application for cutting a ceramic workpiece; however, it is to be understood that although a target application of this disclosure is ceramic components, workpieces/components made of metallic alloy may also benefit. As will be discussed in further detail herein, the machine 20 integrates inline optical feedback control for in-situ, adaptive adjustment of the machining process.

The machine 20 includes a laser source 22, a light-emitting diode (LED) 24, a waterjet head 26, an electronic controller 28, a light sensor 30, and an acoustic sensor 32. The controller 28 may include hardware, such as one or more microprocessors, software, or both that is configured to control the operation of the machine 20 and carry out the functions described in this disclosure. In the illustrated example, the controller 28 is self-contained in the machine 20, although it is also contemplated that portions of the controller 28 may be in one or more separate electronic devices, such as computers, tablets, or the like. As will be described, the acoustic sensor 32 may provide additional monitoring and control capability, but if such capability is not desired the acoustic sensor 32 may be excluded.

The controller 28 is connected with the laser source 22, LED 24, light sensor 30, and acoustic sensor 32 for component control and communication, such as ON/OFF modes of the laser source 22 and the LED 24, ON/OFF modes of the light sensor 30 and acoustic sensor 32, and receipt of electronic feedback signals from the light sensor 30 and acoustic sensor 32. As will be appreciated, the machine 20 may include additional components that are known for waterjet-guided laser equipment, such as but not limited to, mounts or the like for holding a workpiece, an actuator or actuators for moving the workpiece relative to the laser beam, a gas source for delivery and use of process gas, etc.

The laser source 22 is operable to emit a pulsed laser beam 34, and the LED 24 is operable to emit a light beam 36 (different than the pulsed laser beam 34). For example, the light beam 36 has a wavelength of 495-570 nanometers (in the green portion of the spectrum). The waterjet head 26 includes an inlet 26a for receiving water and a nozzle 26b having an outlet 26c for a discharging a high-pressure waterjet 38 therefrom. For example, waterjet pressures may be 50-800 bar, and the diameter of the waterjet 36 may be 25-100 micrometers. The light sensor 30 includes a photodiode that is responsive in the applicable wavelength range for producing electronic sensor signals representative of the intensity of light received thereto. In a further example, the photodiode may be integrated into a camera that also provides visual feedback of the process.

The laser beam 34 emitted from the laser source 22 travels along a laser optical path 34a from the laser source 22, through the nozzle 26b, to the nozzle outlet 26c and then to the workpiece (W). The light beam 36 emitted from the LED 24 travels along a light beam optical delivery path 36a from the LED 24, through the nozzle 26b, to the nozzle outlet 26c and then to the workpiece (W). The light beam optical delivery path 36a is coincident with the laser optical path 34a at least inside of the nozzle 26b (i.e., "inline").

There is also a light beam optical return path 36b along which a portion of the light beam 36 that is reflected off of a workpiece (W) travels back through the nozzle outlet 26c and back through the nozzle 26b to the light sensor 30. The light beam optical return path 34b is coincident with the laser optical path 34a at least inside the nozzle 26b and is coincident with the light beam optical delivery path 36a at least inside of the nozzle 26b.

The paths 34a/36a/36b are designated in Figure 1 using dashed lines of different patterns. In the extents over which the paths 34a/36a/36b are coincident, the dashed lines are somewhat offset from each other so that each dashed line is more clearly visible in the figure. The term "path" as used herein refers to the spatial volume that is occupied by a beam or that will be occupied the beam when its source is ON. Such a path may be defined optically or based on the nominal aperture size or other physical characteristic of the source by which such spatial volume may be calculated or estimated by those of ordinary skill in the art. The term "coincident" as used herein means that two or more paths overlap or substantially overlap along the axes of the direction of travel of the beams, as opposed to the intersecting volume where transverse beams cross. It is to be appreciated that alignment of the axes of the directions of travel of the beams may be inexact, and the axes of the directions of travel are thus taken within a tolerance cone of 5 degrees from the source, or for greater precision within a tolerance cone of 1 degree or 0.5 degrees from the source.

As illustrated, the machine 20 also includes optical components for manipulating the beams 34/36 and fixing the beam paths 34a/36a/36b. For instance, the laser optical path 34a contains, in order from the laser source 22 to the waterjet head 26, a first lens 40, a first mirror 42, a second mirror 44, and a second lens 46. The lenses 40/44 serve to focus the beam or beams, and the mirrors 42/46 redirect the beam or beams. As an example, the mirrors 42/46 may be dichromic mirrors such that one beam is reflected and another transmitted there through.

In the example shown, the light beam optical delivery path 36a is coincident with the with the laser optical path 34a from the second mirror 44 to the second lens 46 and from the second lens 46 to the waterjet head 26. The laser optical path 34a is non-coincident with the with the light beam optical delivery path 36a from the laser source 22 to the first lens 40, from the first lens 40 to the first mirror 42, and from the first mirror 42 to the second mirror 44. The light beam optical return path 36b is coincident with both the light beam optical delivery path and the laser optical path 34a from the waterjet head 26 to the second lens 46 and from the second lens 46 to the second mirror 44. The light beam optical return path 36b is coincident with the laser optical path 34a from the second mirror 44 to the first mirror 42. The light beam optical return path 36b includes a third mirror 48 and a third lens 50. The light beam optical return path 36b is non-coincident with the laser optical path 34a from the first mirror 42 to the third mirror 48 and from the third mirror 48 to the third lens 50 and the light sensor 30. The configuration above permits the LED 24, laser source 22, and light sensor 30 to be spatially separated in the machine 20, yet still allow optical inline integration of the beams 34/36.

In the machining of the workpiece (W), the controller 28 activates the laser source 22 and the LED 24. The laser beam 34 is pulsed at a preset frequency between ON/OFF modes. The controller 28 also pulses the light beam 36 in coordination with the pulses of the laser beam 34 such that during an OFF period of the laser beam 34 the light beam 36 is ON and during an ON period of the laser beam 34 the light beam 36 if OFF.

In the waterjet head 26, the laser beam 34 couples with the waterjet 38 by internal reflection. The waterjet 38 and laser beam 34 impinge upon the workpiece (W). The laser beam 34 ablates the surface of the workpiece (W), thereby removing material. The controller 28 is also configured to move the laser beam 34 relative to the workpiece (W) along a pre-programmed cutting path such that the waterjet 38, and thus also the laser beam 34, scans across the surface of the workpiece (W) to remove material layer-by-layer and thereby form a hole, slot, or other feature in the workpiece (W).

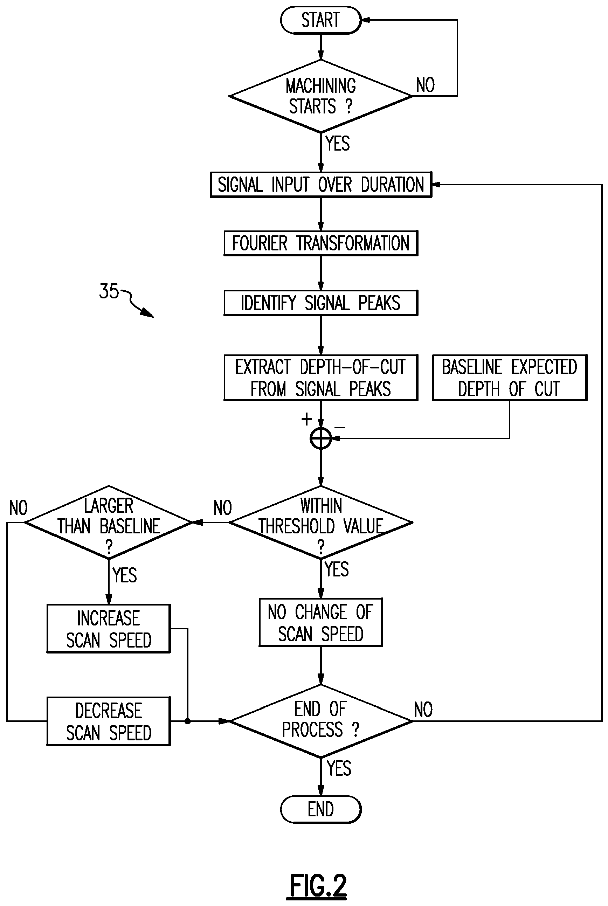

The light beam 36 also impinges the surface of the workpiece (W). At least a portion of the light beam 36 reflects off of the surface and back along the light beam optical return path 36b to the light sensor 30. Responsive to the received reflected light beam 36, the light sensor 30 generates sensor signals that are communicated to the controller 28 as process feedback. The controller 28 is configured to analyze the sensor signals and determine a depth-of-cut of the laser beam 34 into the workpiece (W). For example, the sensor signals are processed via Fourier transform to identify a signal peak or peaks that correspond to the depth-of-cut. Figure 2 illustrates an example of such control logic strategy 35. Thus, changes in the peak or peaks signify changes in the depth-of-cut. As an example, the controller 28 may contain a look-up table or the like by which the peak or peaks can be compared to identify a corresponding depth-of-cut.

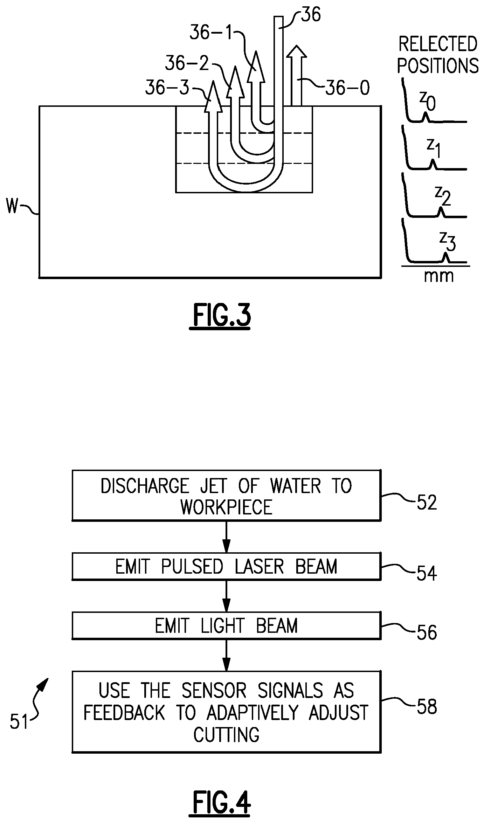

Figure 3 illustrates a further example of the analysis of the sensor signals. As shown, the light beam 36 impinges the workpiece (W). Initially, as cutting begins, there is a baseline reference depth represented by reflected light beam 36-0, which corresponds to signal peak Z0. As the laser beam (not shown) cuts into the workpiece (W) there is a first instant depth-of-cut represented by reflected light beam 36-1, which corresponds to signal peak Z1. With further cutting into the workpiece (W) there is a second instant depth-of-cut represented by reflected light beam 36-2, which corresponds to signal peak Z2. With additional cutting into the workpiece (W) to the bottom of the resulting hole, there is a third instant depth-of-cut represented by reflected light beam 36-3, which corresponds to signal peak Z3. As shown, the relative location of the peaks Z0, Z1, Z2, and Z3 shifts on the x-axis of the graphs as the depth-of-cut increases.

The feedback provided by the sensor signals may be used in real-time by the controller 28 to control and adapt operation of the machine 20. For instance, in a comparison process, the waterjet and laser are scanned across the surface at a preset scan rate. The preset scan rate, however, does not account for the actual depth-of-cut. Therefore, due to process variation, in some locations the depth-of-cut may be shallower than desired while in other locations the depth-of-cut may be deeper than desired. In contrast, the real-time monitoring of the actual depth-of-cut via the feedback sensor signals facilitates dynamic adaptation of the scan rate to achieve a more accurate depth-of-cut. For instance, if the depth-of-cut is shallower than an expected depth-of-cut the controller 28 may decrease scan rate in order to increase depth-of-cut, or if the depth-of-cut is deeper than expected the controller 28 may increase scan rate in order to decrease depth-of-cut. As will be appreciated, thresholds for deviation from expected depths-of-cut and resulting adjustment to the scan rate may be programmed into the controller 28 in accordance with the particular implementation. It is also to be appreciated that the adaptive adjustment is not limited only to scan rate, and that other parameters such as laser power, process water pressure, and/or process water flow (singularly or collectively "process parameters") may be changed in response to the feedback sensor signals.

The controller 28 may also utilize the depth-of-cut feedback as a process fail-safe. For example, once the laser beam 34 is ON, material removal is expected. However, if the feedback indicates that there is no change in the depth-of-cut, such as when the change in the depth-of-cut is below a threshold over a preset time duration, the controller identifies this as a fault condition. In response to the fault condition, the controller 28 may trigger an alert and/or switch the laser source 22 to the OFF mode.

The acoustic sensor 32, if used, may provide additional feedback for process control. The interaction of the laser beam 34 with the workpiece (W) produces acoustic waves. These acoustic waves are received by the acoustic sensor 32, which responsively produces acoustic sensor signals that are communicated to the controller 28 as feedback. In an amplitude/time domain, it can be challenging to identify signal characteristics that represent relevant process parameters, such as the initiation of cutting of the workpiece (W) by the laser beam 34. However, analysis of the acoustic sensor signals in a frequency/time domain by fast Fourier transform produces distinct peaks that are indicative of relevant process parameters, such as the initiation of cutting of the workpiece (W) by the laser beam 34. In this regard, the controller 28 is configured to precisely determine the initiation of cutting of the workpiece (W) by the laser beam 34 based on the acoustic sensor signals. The controller 28 then utilizes the identification of the initiation of cutting to coordinate the pulses of the light beam 36 and the laser beam 34. Thus, as the pulse frequency of the laser beam 34 is known, once initiation of cutting is determined the pulses of the light beam 36 can be initiated out-of-phase with the laser pulses. Such coordination facilitates good signal fidelity by reducing interference between the reflected light beam 36 and the laser beam 34. The acoustic sensor signals may additionally or alternatively be used to identify other characteristics. For example, the "break-through" of cutting a through-hole results in a distinct change in the acoustic signal that can then be used to identify the completion of the cutting process and ceasing of the laser beam 34. Moreover, as the beam paths 34a/36a/36b are coincident over much of their extent, the machine 20 can be compact in size. Additionally, existing waterjet-guided laser machines may even be retrofit in accordance with this disclosure and with the addition of relatively few components.

Figure 4 illustrates an example method 51 of machining the workpiece (W), which is conducted in the machine 20 discussed above. The method 51 includes step 52 of discharging the waterjet 38 from the nozzle outlet 26c of the waterjet head 26. At step 54, the laser beam source 22 emits the pulsed laser beam 34 along the laser optical path 34a through the nozzle 26b and to the nozzle outlet 26c. The laser beam 34 is guided by internal reflection in the waterjet to impinge on the workpiece (W). In step 56, the LED 24 emits the light beam 36 along the light beam optical delivery path 36a through the nozzle 26b and to the nozzle outlet 26c. As discussed, the light beam optical delivery path 36a is coincident with the laser optical path 34a inside of the nozzle 26b. At step 58, a portion of the light beam that is reflected off of the workpiece (W) is received along the light beam optical return path 36b into the light sensor 30. The light sensor 30 emits sensor signals in response thereto . The sensor signals are used, as discussed above, as feedback to the controller 28 to adaptively adjust the cutting of the workpiece (W) by the laser beam 34. For example, the adaptive adjustment is to change the scan rate of the laser beam 34 across the workpiece (W) or to identify a fault condition wherein there is no cutting when cutting is expected. Further details of the method 51 are embodied in the description of the machine 20 above, which is hereby incorporated into the method 51.

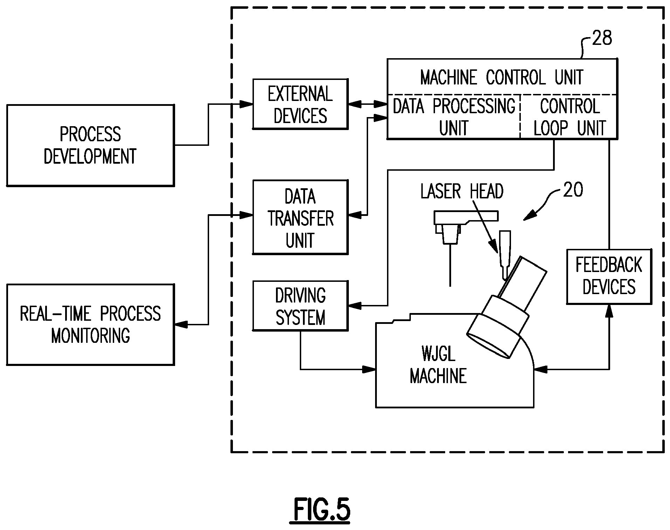

Figure 5 illustrates a further example of the machine 20 and method. Initially, there may be Process Development in which computer models, machine parameters, laser cutting path, and any other programming are provided, such as via external computerized devices into the controller 28. For instance, in order to generate the laser cutting path, a solid form of the feature to be cut (e.g., a solid form of ta hole, slot, etc.) is be partitioned into cross-sections. The cutting path is then programmed for each cross-section such that the laser beam 34 cuts one cross-section by moving along a first cutting path and then cuts the next cross-section by moving over a second cutting path, and so on and so forth for each layer until the feature is completed.

During the cutting process, there is Real-time Process Monitoring. Such monitoring may include, identification of the instant working step in the process, signal analysis, inline optical measurement (e.g., position, depth, and uncertainty), and integration of sensor results. The acoustic sensor signals are captured to detect the beginning of machining, which is then used to trigger the inline optical depth measurement. Also, with position data from the controller 28, the current working step can be identified together with the associated features that are being cut. By including the context information of current machined features, all machining data can be captured using the in-situ measurement system. With the measured data together with the process context information, it is possible to correlate the signals with variations in the cutting parameters, such as laser power, process water pressure, cutting velocity, or water flow rate to facilitate process optimization.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A waterjet-guided laser machine (20) for machining a workpiece (W), the machine (20) comprising:
a laser source (22) operable to emit a pulsed laser beam (34);
a light-emitting diode (LED) (24) operable to emit a light beam (36) different than the pulsed laser beam (34);
a waterjet head (26) including an inlet (26a) for receiving water and a nozzle (26b) having an outlet (26c) for a discharging a jet of the water therefrom;
a light sensor (30);
a laser optical path (34a) along which the pulsed laser beam (34) travels from the laser source (22), through the nozzle (26b) and to the nozzle outlet (26c);
a light beam optical delivery path (36a) along which the light beam (36) travels from the LED (24), through the nozzle (26b) and to the nozzle outlet (26c), the light beam optical delivery path (36a) being coincident with the laser optical path (34a) inside of the nozzle (26b);
a light beam optical return path (36b) along which a portion of the light beam (36) that is reflected off of the workpiece (W) travels from the nozzle outlet (26c) and back through the nozzle (26b) to the light sensor (30), the light beam optical return path (36b) being coincident with the laser optical path (34a) inside the nozzle (26b) and coincident with the light beam optical delivery path (36a) inside the nozzle (26b); and
an electronic controller (28) operably connected with at least the laser source (22), the LED (24), and the light sensor (30), wherein the light sensor (30) is operable to emit sensor signals responsive to the portion of the light beam (36) received into the light sensor (30) from the light beam optical return path (36b), and the electronic controller (28) is configured to determine from the sensor signals a depth-of-cut of the laser beam (34) into the workpiece (W) and **characterized in that** the electronic controller is further configured to adjust scan rate of movement of the laser beam (34) relative to the workpiece (W) along a cutting path based upon the depth-of-cut.

2. The waterjet-guided laser machine (20) as recited in claim 1, wherein the laser optical path (34a) contains, in order from the laser source (22) to the waterjet head (26), a first lens (40), a first mirror (42), a second mirror (44), and a second lens (46).

3. The waterjet-guided laser machine (20) as recited in claim 2, wherein the light beam optical delivery path (36a) is coincident with the with the laser optical path (34a) from the second mirror (44) to the second lens (46) and from the second lens (46) to the waterjet head (26), and the laser optical path (34a) is non-coincident with the with the light beam optical delivery path (36a) from the laser source (22) to the first lens (40), from the first lens (40) to the first mirror (42), and from the first mirror (42) to the second mirror (44).

4. The waterjet-guided laser machine (20) as recited in claim 2 or 3, wherein the light beam optical return path (36b) is coincident with the with the laser optical path (34a) from the waterjet head (26) to the second lens (46), from the second lens (46) to the second mirror (44), and from the second mirror (44) to the first mirror (42).

5. The waterjet-guided laser machine (20) as recited in claim 4, wherein the light beam optical return path (36b) includes a third mirror (48), and the light beam optical return path (36b) is non-coincident with the laser optical path (34a) from the first mirror (42) to the third mirror (48) and from the third mirror (48) to the light sensor (30).

6. The waterjet-guided laser machine (20) as recited in any preceding claim, wherein the LED (24) is operable to emit the light beam (36) having a wavelength of 495-570 nanometers.

7. The waterjet-guided laser machine (20) as recited in any preceding claim, wherein the electronic controller (28) is configured to identify a fault condition if the depth-of-cut is below a threshold over a preset duration.

8. The waterjet-guided laser machine (20) as recited in any preceding claim, wherein the electronic controller (28) is configured to pulse the light beam (36) in coordination with the pulsed laser beam (34) such that during an OFF period of the pulsed laser beam (34) the light beam (36) is ON and during an ON period of the pulsed laser beam (34) the light beam (36) if OFF.

9. The waterjet-guided laser machine (20) as recited in any preceding claim, further comprising an acoustic sensor (32) operable to emit acoustic sensor signals responsive to receiving sound emitted from the workpiece (W), and the electronic controller (28) is configured to determine an initiation of cutting of the workpiece (W) by the laser based on the acoustic sensor signals.

10. The waterjet-guided laser machine (20) as recited in claim 9, wherein the electronic controller (28) is configured to determine the initiation of the cutting of the workpiece (W) by the laser based on the frequency of the acoustic sensor signals.

11. A method of machining a workpiece (W), the method comprising:
in a waterjet-guided laser machine (20):
discharging a jet of water from a nozzle outlet (26c) of a waterjet head (26), the jet impinging the workpiece (W);
emitting a pulsed laser beam (34) from a laser beam source (22) along a laser optical path (34a) through the nozzle (26b) and to the nozzle outlet (26c) such that the pulsed laser beam (34) is guided in the jet of water and also impinges the workpiece (W);
emitting a light beam (36) that is different than the laser beam (34) from a light-emitting diode (LED) (24) along a light beam optical delivery path (36a) through the nozzle (26b) and to the nozzle outlet (26c), the light beam optical delivery path (36a) being coincident with the laser optical path (34a) inside of the nozzle (26b);
receiving into a light sensor (30) a portion of the light beam (36) that is reflected off of the workpiece (W) along a light beam optical return path (36b) from the nozzle outlet (26c) and back through the nozzle (26b), the light sensor (30) emitting sensor signals responsive to the portion of the light beam (36) that is received, the light beam optical return path (36b) being coincident with the laser optical path (34a) inside the nozzle (26b) and coincident with the light beam optical delivery path (36a) inside the nozzle (26b); and
using the sensor signals as feedback in an electronic controller (28) to adaptively adjust the cutting of the workpiece (W) by the laser beam (34), wherein the electronic controller (28) determines from the sensor signals a depth-of-cut of the laser beam (34) into the workpiece (W) and **characterized in that** the electronic controller adjusts a scan rate of the movement of the laser beam (34) relative to the workpiece (W) along a cutting path based upon the depth-of-cut.

12. The method as recited in claim 11, wherein the electronic controller (28)
identifies a fault condition if the depth-of-cut is below a threshold over a preset duration.

13. The method as recited in claim 11 or 12, wherein the electronic controller (28) pulses the light beam (36) in coordination with the pulsed laser beam (34) such that during an OFF period of the pulsed laser beam (34) the light beam (36) is ON and during an ON period of the pulsed laser beam (34) the light beam (36) if OFF.

## Patentansprüche

1. Wasserstrahlgeführte Lasermaschine (20) zum Bearbeiten eines Werkstücks (W), wobei die Maschine (20) umfasst:
eine Laserquelle (22), die betreibbar ist, um einen gepulsten Laserstrahl (34) auszusenden;
eine Leuchtdiode (LED) (24), die betreibbar ist, um einen Lichtstrahl (36) auszusenden, der sich von dem gepulsten Laserstrahl (34) unterscheidet;
einen Wasserstrahlkopf (26), der einen Einlass (26a) zum Aufnehmen von Wasser und eine Düse (26b) mit einem Auslass (26c) zum Ausstoßen eines Strahls des Wassers daraus beinhaltet;
einen Lichtsensor (30);
einen optischen Laserpfad (34a), entlang dem der gepulste Laserstrahl (34) von der Laserquelle (22) durch die Düse (26b) und zu dem Düsenauslass (26c) verläuft;
einen optischen Lichtstrahl-Zuführpfad (36a), entlang dem der Lichtstrahl (36) von der LED (24) durch die Düse (26b) und zu dem Düsenauslass (26c) verläuft, wobei der optische Lichtstrahl-Zuführpfad (36a) innerhalb der Düse (26b) deckungsgleich mit dem optischen Laserpfad (34a) ist;
einen optischen Lichtstrahl-Rückführpfad (36b), entlang dem ein Teil des Lichtstrahls (36), der von dem Werkstück (W) reflektiert wird, von dem Düsenauslass (26c) und zurück durch die Düse (26b) zu dem Lichtsensor (30) verläuft, wobei der optische Lichtstrahl-Rückführpfad (36b) innerhalb der Düse (26b) deckungsgleich mit dem optischen Laserpfad (34a) und
innerhalb der Düse (26b) deckungsgleich mit dem optischen Lichtstrahl-Zuführpfad (36a) ist; und
eine elektronische Steuerung (28), die betriebsfähig mit zumindest der Laserquelle (22), der LED (24) und dem Lichtsensor (30) verbunden ist, wobei der Lichtsensor (30) betreibbar ist, um Sensorsignale in Reaktion auf den Teil des Lichtstrahls (36) auszusenden, der von dem optischen Lichtstrahl-Rückführpfad (36b) in den Lichtsensor (30) aufgenommen wird, und die elektronische Steuerung (28) dazu konfiguriert ist, aus den Sensorsignalen eine Schnitttiefe des Laserstrahls (34) in das Werkstück (W) zu bestimmen, und **dadurch gekennzeichnet, dass** die elektronische Steuerung ferner dazu konfiguriert ist, eine Abtastrate einer Bewegung des Laserstrahls (34) relativ zu dem Werkstück (W) entlang eines Schnittpfads auf Grundlage der Schnitttiefe einzustellen.

2. Wasserstrahlgeführte Lasermaschine (20) nach Anspruch 1, wobei der optische Laserpfad (34a) in der Reihenfolge von der Laserquelle (22) zu dem Wasserstrahlkopf (26) eine erste Linse (40), einen ersten Spiegel (42), einen zweiten Spiegel (44) und eine zweite Linse (46) enthält.

3. Wasserstrahlgeführte Lasermaschine (20) nach Anspruch 2, wobei der optische Lichtstrahl-Zuführpfad (36a) deckungsgleich mit dem optischen Laserpfad (34a) von dem zweiten Spiegel (44) zu der zweiten Linse (46) und von der zweiten Linse (46) zu dem Wasserstrahlkopf (26) ist, und der optische Laserpfad (34a) nicht deckungsgleich mit dem optischen Lichtstrahl-Zuführpfad (36a) von der Laserquelle (22) zu der ersten Linse (40), von der ersten Linse (40) zu dem ersten Spiegel (42) und von dem ersten Spiegel (42) zu dem zweiten Spiegel (44) ist.

4. Wasserstrahlgeführte Lasermaschine (20) nach Anspruch 2 oder 3, wobei der optische Lichtstrahl-Rückführpfad (36b) deckungsgleich mit dem optischen Laserpfad (34a) von dem Wasserstrahlkopf (26) zu der zweiten Linse (46), von der zweiten Linse (46) zu dem zweiten Spiegel (44) und von dem zweiten Spiegel (44) zu dem ersten Spiegel (42) ist.

5. Wasserstrahlgeführte Lasermaschine (20) nach Anspruch 4, wobei der optische Lichtstrahl-Rückführpfad (36b) einen dritten Spiegel (48) beinhaltet und der optische Lichtstrahl-Rückführpfad (36b) nicht deckungsgleich mit dem optischen Laserpfad (34a) von dem ersten Spiegel (42) zu dem dritten Spiegel (48) und von dem dritten Spiegel (48) zu dem Lichtsensor (30) ist.

6. Wasserstrahlgeführte Lasermaschine (20) nach einem der vorhergehenden Ansprüche, wobei die LED (24) betreibbar ist, um den Lichtstrahl (36) mit einer Wellenlänge von 495-570 Nanometern auszusenden.

7. Wasserstrahlgeführte Lasermaschine (20) nach einem der vorhergehenden Ansprüche, wobei die elektronische Steuerung (28) dazu konfiguriert ist, einen Fehlerzustand zu identifizieren, wenn die Schnitttiefe über eine voreingestellte Dauer unter einem Schwellenwert liegt.

8. Wasserstrahlgeführte Lasermaschine (20) nach einem der vorhergehenden Ansprüche, wobei die elektronische Steuerung (28) dazu konfiguriert ist, den Lichtstrahl (36) in Abstimmung mit dem gepulsten Laserstrahl (34) derart zu pulsen, dass während einer AUS-Periode des gepulsten Laserstrahls (34) der Lichtstrahl (36) EIN ist und während einer EIN-Periode des gepulsten Laserstrahls (34) der Lichtstrahl (36) AUS ist.

9. Wasserstrahlgeführte Lasermaschine (20) nach einem der vorhergehenden Ansprüche, ferner umfassend einen akustischen Sensor (32), der betreibbar ist, um akustische Sensorsignale in Reaktion auf ein Empfangen von Schall auszusenden, der von dem Werkstück (W) abgegeben wird, und wobei die elektronische Steuerung (28) dazu konfiguriert ist, auf Grundlage der akustischen Sensorsignale einen Beginn eines Schneidens des Werkstücks (W) durch den Laser zu bestimmen.

10. Wasserstrahlgeführte Lasermaschine (20) nach Anspruch 9, wobei die elektronische Steuerung (28) dazu konfiguriert ist, den Beginn des Schneidens des Werkstücks (W) durch den Laser auf Grundlage der Frequenz der akustischen Sensorsignale zu bestimmen.

11. Verfahren zum Bearbeiten eines Werkstücks (W), wobei das Verfahren umfasst:
in einer wasserstrahlgeführten Lasermaschine (20):
Ausstoßen eines Wasserstrahls aus einem Düsenauslass (26c) eines Wasserstrahlkopfes (26), wobei der Strahl auf das Werkstück (W) auftrifft;
Aussenden eines gepulsten Laserstrahls (34) von einer Laserstrahlquelle (22) entlang eines optischen Laserpfads (34a) durch die Düse (26b) und zu dem Düsenauslass (26c), so dass der gepulste Laserstrahl (34) in dem Wasserstrahl geführt wird und ebenfalls auf das Werkstück (W) auftrifft;
Aussenden eines Lichtstrahls (36), der sich von dem Laserstrahl (34) unterscheidet, von einer Leuchtdiode (LED) (24) entlang eines optischen Lichtstrahl-Zuführpfads (36a) durch die Düse (26b) und zu dem Düsenauslass (26c), wobei der optische Lichtstrahl-Zuführpfad (36a) innerhalb der Düse (26b) deckungsgleich mit dem optischen Laserpfad (34a) ist;
Aufnehmen eines Teils des Lichtstrahls (36), der von dem Werkstück (W) reflektiert wird, in einen Lichtsensor (30) entlang eines optischen Lichtstrahl-Rückführpfads (36b) von dem Düsenauslass (26c) und zurück durch die Düse (26b), wobei der Lichtsensor (30) Sensorsignale in Reaktion auf den aufgenommenen Teil des Lichtstrahls (36) aussendet, wobei der optische Lichtstrahl-Rückführpfad (36b) innerhalb der Düse (26b) deckungsgleich mit dem optischen Laserpfad (34a) und innerhalb der Düse (26b) deckungsgleich mit dem optischen Lichtstrahl-Zuführpfad (36a) ist; und
Verwenden der Sensorsignale als Rückkopplung in einer elektronischen Steuerung (28), um das Schneiden des Werkstücks (W) durch den Laserstrahl (34) adaptiv einzustellen, wobei die elektronische Steuerung (28) aus den Sensorsignalen eine Schnitttiefe des Laserstrahls (34) in das Werkstück (W) bestimmt und **dadurch gekennzeichnet, dass** die elektronische Steuerung
eine Abtastrate der Bewegung des Laserstrahls (34) relativ zu dem Werkstück (W) entlang eines Schnittpfads auf Grundlage der Schnitttiefe einstellt.

12. Verfahren nach Anspruch 11, wobei die elektronische Steuerung (28) einen Fehlerzustand identifiziert, wenn die Schnitttiefe über eine voreingestellte Dauer unter einem Schwellenwert liegt.

13. Verfahren nach Anspruch 11 oder 12, wobei die elektronische Steuerung (28) den Lichtstrahl (36) in Abstimmung mit dem gepulsten Laserstrahl (34) derart pulst, dass während einer AUS-Periode des gepulsten Laserstrahls (34) der Lichtstrahl (36) EIN ist und während einer EIN-Periode des gepulsten Laserstrahls (34) der Lichtstrahl (36) AUS ist.

## Revendications

1. Machine laser guidée par jet d'eau (20) pour l'usinage d'une pièce (W), la machine (20) comprenant :
une source laser (22) capable d'émettre un faisceau laser pulsé (34) ;
une diode électroluminescente (DEL) (24) pouvant être actionnée pour émettre un faisceau lumineux (36) différent du faisceau laser pulsé (34) ;
une tête de jet d'eau (26) incluant une entrée (26a) pour recevoir l'eau et une buse (26b) présentant une sortie (26c) pour évacuer un jet d'eau de celle-ci ;
un capteur de lumière (30) ;
un chemin optique laser (34a) le long duquel le faisceau laser pulsé (34) se déplace de la source laser (22), à travers la buse (26b) et jusqu'à la sortie de la buse (26c) ;
un chemin optique de transmission de faisceau lumineux (36a) le long duquel le faisceau lumineux (36) se déplace de la DEL (24), à travers la buse (26b) et jusqu'à la sortie de la buse (26c), le chemin optique de transmission du faisceau lumineux (36a) étant en coïncidence avec le chemin optique du laser (34a) à l'intérieur de la buse (26b) ;
un chemin de retour optique de faisceau lumineux (36b) le long duquel une partie du faisceau lumineux (36) réfléchie par la pièce (W) se déplace de la sortie de la buse (26c) et revient à travers la buse (26b) jusqu'au capteur de lumière (30), le chemin de retour optique du faisceau lumineux (36b) étant coïncident avec le chemin optique du laser (34a) à l'intérieur de la buse (26b) et coïncident avec le chemin de transmission optique du faisceau lumineux (36a) à l'intérieur de la buse (26b) ; et
un contrôleur électronique (28) connecté de manière fonctionnelle à au moins la source laser (22), la DEL (24) et le capteur de lumière (30), le capteur de lumière (30) pouvant être actionné pour émettre des signaux de capteur en réponse à la partie du faisceau lumineux (36) reçue dans le capteur de lumière (30) à partir du chemin de retour optique de faisceau lumineux (36b), et le contrôleur électronique (28) étant configuré pour déterminer à partir des signaux de capteur une profondeur de coupe du faisceau laser (34) dans la pièce (W) et **caractérisé en ce que** le contrôleur électronique est en outre configuré pour ajuster la vitesse de balayage du mouvement du faisceau laser (34) par rapport à la pièce (W) le long d'un chemin de coupe en fonction de la profondeur de coupe.

2. Machine laser guidée par jet d'eau (20) selon la revendication 1, dans laquelle le chemin optique de laser (34a) contient, dans l'ordre de la source laser (22) à la tête de jet d'eau (26), une première lentille (40), un premier miroir (42), un deuxième miroir (44) et une deuxième lentille (46).

3. Machine laser guidée par jet d'eau (20) selon la revendication 2, dans laquelle le chemin optique de transmission de faisceau lumineux (36a) coïncide avec le chemin optique du laser (34a) du deuxième miroir (44) à la deuxième lentille (46) et de la deuxième lentille (46) à la tête de jet d'eau (26), et le chemin optique du laser (34a) ne coïncide pas avec le chemin optique de transmission du faisceau lumineux (36a) de la source laser (22) à la première lentille (40), de la première lentille (40) au premier miroir (42) et du premier miroir (42) au deuxième miroir (44).

4. Machine laser guidée par jet d'eau (20) telle que décrite dans la revendication 2 ou 3, dans laquelle le chemin de retour optique du faisceau lumineux (36b) est en coïncidence avec le chemin optique laser (34a) de la tête de jet d'eau (26) à la deuxième lentille (46), de la deuxième lentille (46) au deuxième miroir (44) et du deuxième miroir (44) au premier miroir (42).

5. Machine laser guidée par jet d'eau (20) selon la revendication 4, dans laquelle le chemin de retour optique de faisceau lumineux (36b) comprend un troisième miroir (48), et le chemin de retour optique de faisceau lumineux (36b) est sans coïncidence avec le chemin optique laser (34a) du premier miroir (42) au troisième miroir (48) et du troisième miroir (48) au capteur de lumière (30).

6. Machine laser guidée par jet d'eau (20) selon l'une quelconque des revendications précédentes, dans laquelle la DEL (24) peut être actionnée pour émettre le faisceau lumineux (36) présentant une longueur d'onde de 495 à 570 nanomètres.

7. Machine laser guidée par jet d'eau (20) selon l'une quelconque des revendications précédentes, dans laquelle le contrôleur électronique (28) est configuré pour identifier une condition de défaut si la profondeur de coupe est inférieure à un seuil pendant une durée prédéfinie.

8. Machine laser guidée par jet d'eau (20) selon l'une quelconque des revendications précédentes, dans laquelle le contrôleur électronique (28) est configuré pour faire pulser le faisceau lumineux (36) en coordination avec le faisceau laser pulsé (34) de sorte que pendant une période d'arrêt du faisceau laser pulsé (34), le faisceau lumineux (36) est allumé et pendant une période d'activation du faisceau laser pulsé (34), le faisceau lumineux (36) est éteint.

9. Machine laser guidée par jet d'eau (20) selon l'une quelconque des revendications précédentes, comprenant en outre un capteur acoustique (32) pouvant être actionné pour émettre des signaux de capteur acoustique en réponse à la réception d'un son émis par la pièce (W), et le contrôleur électronique (28) est configuré pour déterminer le début de la découpe de la pièce (W) par le laser sur la base des signaux du capteur acoustique.

10. Machine laser guidée par jet d'eau (20) selon la revendication 9, dans laquelle le contrôleur électronique (28) est configuré pour déterminer le début de la découpe de la pièce (W) par le laser en fonction de la fréquence des signaux du capteur acoustique.

11. Procédé d'usinage d'une pièce (W), le procédé comprenant :
dans une machine laser guidée par jet d'eau (20) :
la décharge d'un jet d'eau à partir d'une sortie de buse (26c) d'une tête de jet d'eau (26), le jet frappant la pièce à usiner (W) ;
l'émission d'un faisceau laser pulsé (34) à partir d'une source de faisceau laser (22) le long d'un chemin optique laser (34a) à travers la buse (26b) et jusqu'à la sortie de la buse (26c) de sorte que le faisceau laser pulsé (34) soit guidé dans le jet d'eau et frappe également la pièce (W) ;
l'émission d'un faisceau lumineux (36) différent du faisceau laser (34) à partir d'une diode électroluminescente (DEL) (24) le long d'un chemin optique de transmission de faisceau lumineux (36a) à travers la buse (26b) et jusqu'à la sortie de la buse (26c), le chemin optique de transmission de faisceau lumineux (36a) étant en coïncidence avec le chemin optique de laser (34a) à l'intérieur de la buse (26b) ;
la réception dans un capteur de lumière (30) d'une partie du faisceau lumineux (36) réfléchie par la pièce (W) le long d'un trajet optique de retour de faisceau lumineux (36b) depuis la sortie de la buse (26c) et retournant à travers la buse (26b), le capteur de lumière (30) émettant des signaux de capteur en réponse à la partie du faisceau lumineux (36) reçue, le trajet optique de retour de faisceau lumineux (36b) étant en coïncidence avec le trajet optique de laser (34a) à l'intérieur de la buse (26b) et étant en coïncidence avec le trajet optique de transmission de faisceau lumineux (36a) à l'intérieur de la buse (26b) ; et
l'utilisation des signaux de capteur comme retour d'information dans un contrôleur électronique (28) pour ajuster de manière adaptative la découpe de la pièce (W) par le faisceau laser (34), le contrôleur électronique (28) déterminant à partir des signaux de capteur la profondeur de coupe du faisceau laser (34) dans la pièce (W) et **caractérisé en ce que** le contrôleur électronique
ajuste la vitesse de balayage du mouvement du faisceau laser (34) par rapport à la pièce (W) le long d'un chemin de coupe en fonction de la profondeur de coupe.

12. Procédé selon la revendication 11, dans lequel le contrôleur électronique (28) identifie une condition de défaut si la profondeur de coupe est inférieure à un seuil pendant une durée prédéfinie.

13. Procédé selon l'une quelconque des revendications 11 ou 12, dans lequel le contrôleur électronique (28) fait pulser le faisceau lumineux (36) en coordination avec le faisceau laser pulsé (34) de sorte que pendant une période d'arrêt du faisceau laser pulsé (34), le faisceau lumineux (36) est allumé et pendant une période d'activation du faisceau laser pulsé (34), le faisceau lumineux (36) est éteint.
